# FASCICULE DE BREVET EUROPEEN

(11) **EP 1 850 604 B1**
(45) Date de publication et mention de la délivrance du brevet: **08.09.2010**
(21) Numéro de dépôt: 06300401.4
(22) Date de dépôt: 24.04.2006
(51) Int. Cl.: H04W 4/06

(54) **Dispositif de contrôle de fourniture â des équipements d'utilisateurs de données rélatives â un service de diffusion d'un réseau mobile**
Steuerungsvorrichtung zur Bereitstellung von Broadcast-Daten für Benutzergeräte in einem mobilen Netzwerk
Control device for delivering mobile network broadcast-service data to mobile users

(43) Date de publication de la demande: 31.10.2007
(73) Titulaire: Alcatel Lucent, 75008 Paris (FR)
(72) Inventeur: Bourdeaut, Stanislas, 75015, PARIS (FR)
(74) Mandataire: Hedarchet, Stéphane

(56) Documents cités:
- EP-A- 1 376 926
- "Universal Mobile Telecommunications System (UMTS); Radio Interface for Broadcast/Multicast Services (3GPP TR 25.925 version 3.5.0 Release 1999); ETSI TR 125 925" ETSI STANDARDS, EUROPEAN TELECOMMUNICATIONS STANDARDS INSTITUTE, SOPHIA-ANTIPO, FR, vol. 3-R2, no. V350, décembre 2004 (2004-12), XP014027170 ISSN: 0000-0001
- "Universal Mobile Telecommunications System (UMTS); Introduction of Multimedia Broadcast/Multicast Service (MBMS) in the Radio Access Network (RAN); Stage 2 (3GPP TS 25.346 version 6.2.0 Release 6); ETSI TS 125 346" ETSI STANDARDS, EUROPEAN TELECOMMUNICATIONS STANDARDS INSTITUTE, SOPHIA-ANTIPO, FR, vol. 3-R, no. V620, septembre 2004 (2004-09), XP014016839 ISSN: 0000-0001
- "Universal Mobile Telecommunications System (UMTS); Multimedia Broadcast/Multicast Service (MBMS); Architecture and functional description (3GPP TS 23.246 version 6.8.0 Release 6); ETSI TS 123 246" ETSI STANDARDS, EUROPEAN TELECOMMUNICATIONS STANDARDS INSTITUTE, SOPHIA-ANTIPO, FR, vol. 3-SA2, no. V680, septembre 2005 (2005-09), XP014031874 ISSN: 0000-0001

## Description

L'invention concerne le domaine des réseaux de (télé)communication mobile (ou cellulaire), et plus précisément le contrôle de la fourniture à des équipements d'utilisateurs de données relatives à des services de diffusion de contenus multimédia offerts par de tels réseaux.

On entend ici par « service de diffusion » tout service de diffusion unidirectionnelle de type point-à-multipoints de contenu(s) multimédia, et en particulier le service de diffusion de type MBMS (« Multimedia Broadcast / Multimedia Service »).

Il est rappelé que le service de diffusion MBMS est défini dans la sixième version des spécifications 3GPP (3rd Generation Partnership Project), qui régit la transmission de données multimédia dans les réseaux mobiles (ou cellulaires), comme par exemple les réseaux UMTS ou EDGE, et en particulier dans les spécifications techniques 3GPP TS 25.346 et 23.246 (notamment accessibles sur le site Internet du 3GPP à l'adresse « www.3gpp.org »).

Par ailleurs, on entend ici par « contenu multimédia » des fichiers de données (ou « data » en anglais), de la voix, des fichiers audio, ou des vidéos, notamment.

Comme le sait l'homme de l'art, les équipements d'utilisateurs, comme par exemple les téléphones mobiles, qui en sont à la version n°99 (R99), sont configurés pour recevoir des contenus diffusés dans des canaux de trafic communs accessibles dans les cellules dans lesquelles ils sont situés. Les données multimédia sont transmises dans ces canaux de trafic communs sous la forme de messages de type BMC CBS (pour « Broadcast and Multicast Control - Cell Broadcast System »), définis dans les spécifications techniques TS 25.324 du 3GPP.

D'après la norme 3GPP R99, l'utilisation des canaux de trafic communs de type CTCH ne permet pas la mise en oeuvre de services de diffusion de type MBMS offerts par des serveurs de contenus multimédia connectés au coeur de réseau (ou « core network ») d'un réseau mobile, généralement à un noeud de type GGSN (pour « Gateway GPRS Support Node ») lorsqu'ils sont de type IP (« Internet Protocol »). En raison de cette limitation technologique, les serveurs de contenus multimédia, qui peuvent aujourd'hui alimenter les équipements d'utilisateurs de type R99, doivent être connectés soit aux contrôleurs de réseau radio des réseaux d'accès radio des réseaux mobiles, soit à un centre de gestion et de maintenance de type OMC (pour « Operation and Maintenance Centre »), faisant partie du système de gestion de réseau ou NMS (pour « Network Management System ») du réseau mobile et connecté aux contrôleurs de réseau radio. Dans ce dernier cas, l'opérateur du réseau mobile doit utiliser une interface propriétaire pour connecter le(s) serveur(s) de contenus multimédia à son OMC.

L'invention a donc pour but d'améliorer la situation, et notamment de proposer une nouvelle architecture permettant de diffuser vers des équipements d'utilisateurs de type R99, connectés à un réseau mobile, des contenus multimédia délivrés par des serveurs de contenus multimédia (en particulier de type MBMS) connectés au coeur de réseau de ce réseau mobile.

Elle propose à cet effet un dispositif dédié au contrôle de la fourniture à des équipements d'utilisateurs de données relatives à un service de diffusion de contenus multimédia, via un réseau d'accès radio d'un réseau de (télé)communication mobile disposant en outre d'un coeur de réseau et d'un système de gestion de réseau.

Ce dispositif de contrôle se caractérise par le fait qu'il est destiné à équiper un contrôleur de réseau radio d'un réseau d'accès radio, et qu'il comprend :
- des moyens de collection chargés de recevoir, d'une part, des données d'informations de configuration provenant du système de gestion de réseau, et d'autre part, des données multimédia de contenus à diffuser provenant d'au moins un serveur de contenus multimédia, via le coeur de réseau, et
- des moyens de contrôle chargés de sélectionner parmi les données reçues (par les moyens de collection) des données d'informations de configuration, propres à permettre à des équipements d'utilisateurs, situés dans au moins une cellule contrôlée par le contrôleur de réseau radio, de se configurer pour surveiller au moins un canal de trafic commun de type CTCH (pour « Common Traffic CHannel »), de sorte qu'elles soient intégrées dans un message de signalisation destiné à être transmis sur un canal de contrôle aux équipements d'utilisateurs, puis des données multimédia de sorte qu'elles soient intégrées dans un message de données destiné à être transmis à ces équipements d'utilisateurs sur le canal de trafic commun de type CTCH.

Le dispositif selon l'invention peut comporter d'autres caractéristiques qui peuvent être prises séparément ou en combinaison, et notamment :
- lorsque le contrôleur de réseau radio comprend une pile de protocoles comportant notamment une première couche dédiée au contrôle de ressources radio et destinée à transmettre des messages de signalisation à destination d'équipements de réseau et une seconde couche d'adaptation de services de diffusion de type BMC destinée à transmettre des messages de données à destination des équipements de réseau, les moyens de contrôle peuvent être chargés d'ordonner à la première couche d'intégrer les données d'informations de configuration sélectionnées dans un message de signalisation afin de les transmettre aux équipements d'utilisateurs sur le canal de contrôle, puis d'ordonner à la seconde couche d'intégrer les données multimédia sélectionnées dans un message de données afin de les transmettre aux équipements d'utilisateurs sur le canal de trafic commun de type CTCH ;
   ➢ les moyens de contrôle peuvent être chargés d'ordonner à la seconde couche d'intégrer les données multimédia sélectionnées dans des messages de type BMC comprenant un entête signalant qu'ils comprennent de telles données multimédia ;
   ➢ dans une variante, les moyens de contrôle peuvent être chargés d'ordonner à la seconde couche d'intégrer les données multimédia sélectionnées dans des messages de type BMC dédiés spécifiquement au transport de données multimédia ;
- les données multimédia peuvent être diffusées dans le cadre de services de diffusion de type MBMS,
- les données multimédia peuvent être issues d'un coeur de réseau de type MBMS, défini dans la norme 3GPP version n°6 (« release 6 »), et notamment via l'interface lu, RANAP 3GPP définis dans les spécifications techniques du 3GPP TS 25.413, et UTRAN lu, interface avec les protocoles de plan d'utilisateur définis dans les spécifications techniques du 3GPP TS 25.415.

L'invention propose également un contrôleur de réseau radio, pour un réseau d'accès radio d'un réseau de (télé)communication mobile, comprenant, d'une part, une pile de protocoles comportant notamment une première couche dédiée au contrôle de ressources radio et destinée à transmettre des messages de signalisation à destination d'équipements de réseau et une seconde couche d'adaptation de services de diffusion de type BMC destinée à transmettre des messages de données à destination des équipements de réseau, et d'autre part, un dispositif de contrôle du type de celui présenté ci-avant et chargé d'alimenter les première et seconde couches respectivement en données d'informations de configuration sélectionnées et en données multimédia sélectionnées en vue de leur transmission à des équipements de réseau.

L'invention propose également un équipement d'utilisateur, capable de se connecter à un réseau d'accès radio d'un réseau de (télé)communication mobile, et comprenant, d'une part, une application multimédia interne chargée d'utiliser des données multimédia, et d'autre part, des moyens de traitement chargés, en cas de réception d'un message de type BMC comportant des données multimédia et transmis sur un canal de trafic commun de type CTCH par un contrôleur de réseau radio, du type de celui présenté ci-avant, d'extraire ces données multimédia afin de les transmettre à l'application multimédia interne.

L'invention est particulièrement bien adaptée, bien que de façon non exclusive, aux réseaux de (télé)communication mobile de type GPRS, UMTS ou CDMA, et toutes leurs variantes (comme par exemple CDMA2000).

D'autres caractéristiques et avantages de l'invention apparaîtront à l'examen de la description détaillée ci-après, et des dessins annexés, sur lesquels :
- la figure 1 illustre de façon très schématique et fonctionnelle l'architecture générale d'un réseau de (télé)communication mobile, comprenant un réseau d'accès radio muni d'un contrôleur de réseau radio, équipé d'un exemple de dispositif de contrôle selon l'invention, et auquel sont connectés des exemples d'équipements d'utilisateurs selon l'invention, et
- la figure 2 illustre de façon schématique les piles de protocoles permettant la mise en oeuvre de l'invention dans un réseau mobile du type de celui illustré sur la figure 1.

Les dessins annexés pourront non seulement servir à compléter l'invention, mais aussi contribuer à sa définition, le cas échéant.

L'invention est destinée à permettre le contrôle de la fourniture à des équipements d'utilisateurs de données d'informations de configuration et de données multimédia de services de diffusion de contenus multimédia accessibles dans les cellules dans lesquelles ils sont situés et/ou dans des cellules voisines de ces dernières, lorsque ces données multimédia proviennent de serveur(s) de contenus multimédia connectés au coeur de réseau d'un réseau mobile.

Dans ce qui suit, on considère à titre d'exemple non limitatif que les cellules font partie d'un réseau d'accès radio (ou UTRAN) d'un réseau de (télé)communication de type UMTS (pour « Universal Mobile Telecommunication System ») offrant des services de diffusion de contenus multimédia de type MBMS (ci-après appelés services MBMS).

Il est important de noter que ces services MBMS peuvent varier d'une cellule à l'autre ou d'un groupe de cellules à l'autre.

Mais, l'invention n'est pas limitée à ce type de réseau mobile. Elle concerne en effet tout réseau mobile (ou cellulaire) capable de mettre à la disposition d'équipements d'utilisateurs clients, éventuellement mobiles, des services de diffusion de contenus multimédia, de préférence de type MBMS.

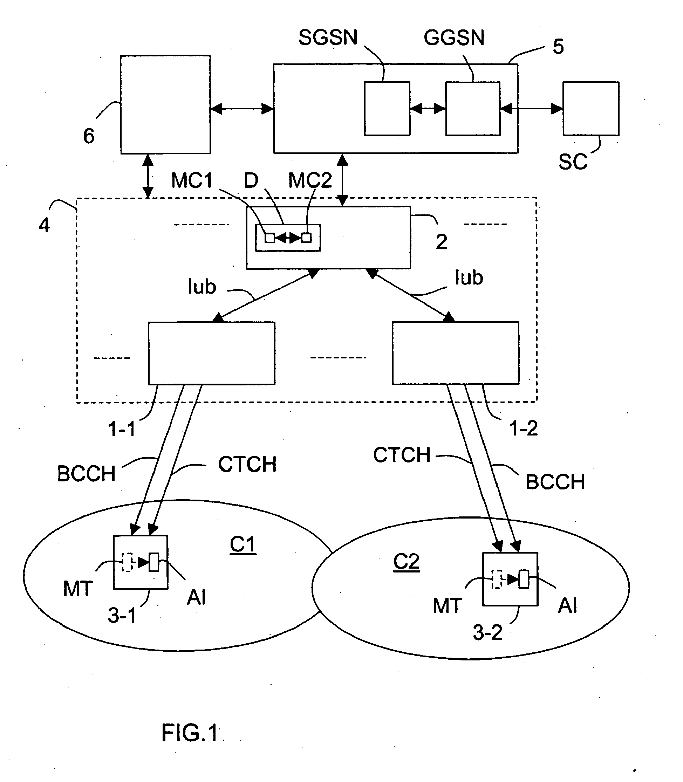

On se réfère tout d'abord à la figure 1 pour décrire, de façon très schématique, mais néanmoins suffisante à la compréhension de l'invention, un exemple de réseau (de (télé)communication) mobile dans lequel peut être mise en oeuvre l'invention.

Le réseau mobile comprend un réseau d'accès radio 4, appelé UTRAN (pour « UMTS Terrestrial Radio Access Network ») dans le cas de l'UMTS, connecté à un coeur de réseau (ou « core network ») 5 et à un système de gestion de réseau 6 (ou NMS pour « Network Management System »).

L'UTRAN comprend des stations de base 1-i, appelées « Node B » dans le cas de l'UMTS, et des contrôleurs de réseau radio 2, appelés « RNC » (pour « Radio Network Controller ») dans le cas de l'UMTS.

Dans l'exemple non limitatif illustré sur la figure 1, seules deux stations de base 1-1 et 1-2 (i = 1 ou 2) et un contrôleur 2 ont été représentés. Mais, l'indice i peut prendre n'importe quelle valeur supérieure ou égale à un (1), et le nombre de contrôleurs 2 peut être supérieur à un (1).

Les stations de base 1 sont principalement des émetteurs/récepteurs associés chacun à au moins une zone de couverture (ou cellule) Ci dans laquelle des communications radio peuvent être établies avec des équipements d'utilisateurs 3-j qui s'y trouvent situés. Les contrôleurs 2 sont en charge du contrôle du réseau radio et des actions effectuées par les différents équipements d'utilisateurs 3-j.

Les équipements d'utilisateurs 3-j (ou UE dans le cas de l'UMTS) sont de préférence mobiles. Dans l'exemple non limitatif illustré sur la figure 1, seuls deux équipements d'utilisateurs 3-1 et 3-2 (j = 1 ou 2) ont été représentés. Mais, l'indice j peut prendre n'importe quelle valeur supérieure ou égale à un (1).

Les équipements d'utilisateurs 3-j sont des terminaux de communication de type R99 capables d'échanger par voie d'ondes des données, notamment de service et de contrôle, avec le réseau mobile (ou cellulaire). Il s'agit, par exemple, de terminaux mobiles tels que des téléphones mobiles. Mais, il pourrait s'agir de terminaux de communication d'autres types, comme par exemple des ordinateurs portables ou des assistants numériques personnels (ou PDAs) équipés d'un module de communication radio. Dans ce qui suit, on considère, à titre d'exemple illustratif et non limitatif, que les équipements d'utilisateurs 3-j sont des téléphones mobiles.

Le coeur de réseau 5 comprend des équipements de réseau qui pour certains sont raccordés notamment aux contrôleurs de réseau radio 2. Parmi ces équipements on peut notamment citer au moins un noeud SGSN (pour « Serving GPRS Support Node »), raccordé notamment à des contrôleurs de réseau radio 2, et au moins un noeud GGSN (pour « Gateway GPRS Support Node ») connecté au noeud SGSN et assurant la connexion du coeur de réseau 5 à au moins un serveur de contenus multimédia (par exemple de type IP) offrant des services de diffusion de contenus multimédia de type MBMS.

Le système de gestion de réseau 6 (ou NMS) comprend notamment un centre de gestion et de maintenance de type OMC (pour « Operation and Maintenance Centre »), chargé notamment d'adresser des informations de configuration aux équipements de l'UTRAN 4.

L'invention propose d'implanter dans (ou de coupler à) certains au moins des contrôleurs de réseau radio 2 du réseau d'accès radio 4, et de préférence dans tous, un dispositif de contrôle D comprenant un module de collection MC1 et un module de contrôle MC2.

Le module de collection MC1 est chargé de recevoir, d'une part, du système de gestion de réseau 6 (et plus précisément de son centre de gestion OMC) des données d'informations de configuration relatives aux services MBMS devant être mis à la disposition des téléphones mobiles 3-j, et d'autre part, d'au moins un serveur de contenus multimédia SC, via le coeur de réseau 5 et donc via une interface lu de type 3GPP version n°6 (« release 6 »), des données multimédia de contenus à diffuser sous la forme de service(s) MBMS. Il comprend par exemple une première mémoire dans laquelle il stocke les données d'informations de configuration, et une seconde mémoire dans laquelle il stocke les données des contenus multimédia, et qui est généralement limitée en capacité de stockage.

Plus préférentiellement, les données multimédia sont issues d'un coeur de réseau de type MBMS, via l'interface lu, RANAP 3GPP définis dans les spécifications techniques du 3GPP TS 25.413, et UTRAN lu, interface avec les protocoles de plan d'utilisateur définis dans les spécifications techniques du 3GPP TS 25.415.

Les données d'informations de configuration sont, au moins pour certaines d'entre elles, destinées à permettre à des téléphones mobiles 3-j (de type R99), qui sont situés dans au moins une cellule Ci contrôlée par un contrôleur de réseau radio 2, de se configurer de manière à être capables de surveiller au moins un canal de trafic commun de type CTCH (pour « Common Traffic CHannel ») au moins dans cette cellule Ci.

Parmi ces informations de configuration, on peut notamment citer la liste des aires de service(s) pour lesquelles chaque service MBMS ou groupe de services MBMS doit être diffusé, les informations de programmation de chaque service MBMS ou groupe de services MBMS, la qualité de service (QoS) requise pour chaque service MBMS ou groupe de services MBMS, et la configuration de chaque canal de trafic commun de type CTCH.

Les données multimédia sont des données qui constituent un contenu multimédia, comme par exemple un fichier de données (ou « data » en anglais), de la voix, un fichier audio, ou une vidéo, ou des programmes de télévision, ou encore toute combinaison des contenus précités. Ces données peuvent être éventuellement comprimées soit par le serveur de contenus, soit par le contrôleur de réseau radio.

Le module de contrôle MC2 est tout d'abord chargé de sélectionner parmi les données qui ont été reçues par le module de collection MC1, en fonction d'instructions fournies par le coeur de réseau 5 et/ou par l'OMC, des données d'informations de configuration, permettant à des téléphones mobiles 3-j, qui sont situés dans au moins une cellule Ci contrôlée par son contrôleur de réseau radio 2, de se configurer afin de pouvoir surveiller au moins un canal de trafic commun de type CTCH. Ces données d'informations de configuration sélectionnées sont destinées à être intégrées dans un message de signalisation qui doit être transmis par le contrôleur de réseau radio 2 sur un canal de contrôle à destination des téléphones mobiles 3-j.

Chaque cellule Ci, dans laquelle un message de signalisation relatif à un service MBMS ou un groupe de services MBMS doit être diffusé, est déterminée par le module de contrôle MC2 en fonction de la liste de cellules contrôlée par le contrôleur de réseau radio 2 et de l'aire ou des aires de service(s) pour laquelle (ou lesquelles) ledit service MBMS ou groupe de services MBMS doit être diffusé. Ces informations sont fournies par l'OMC du système de gestion de réseau 6.

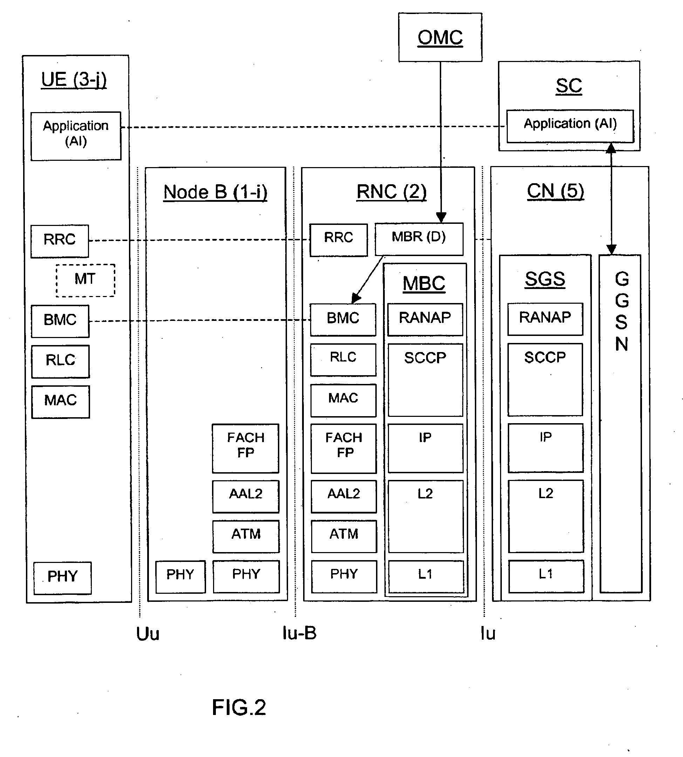

Chaque message de signalisation (MBMS) est généré par le contrôleur de réseau radio 2 (sur ordre du module de contrôle MC2) au moyen d'un protocole de contrôle de ressources radio, comme par exemple le protocole RRC (« Radio Resource Control »). Comme cela est illustré sur la figure 2, ce protocole RRC est mis en oeuvre par une couche protocolaire située à un sous-niveau du niveau 3 de l'interface radio UMTS.

Le module de contrôle MC2 transmet ses ordres et les données d'informations de configuration correspondantes à la couche protocolaire RRC à des instants choisis de manière à activer le service de diffusion multimédia (ou « Multimedia Broadcast Service ») en fonction des instructions de programmation des services, transmises par le système de gestion de réseau 6.

Chaque message de signalisation (MBMS) est transmis par la couche protocolaire RRC vers les téléphones d'utilisateurs 3-j sur un canal de contrôle qui est par exemple le canal de diffusion d'informations système appelé BCCH (pour « Broadcast Control CHannel »). Mais, il pourrait également utiliser un autre canal de contrôle, comme par exemple un canal dédié de type DCCH (pour « Dedicated Control CHannel »).

On notera que, considéré du point de vue de la pile de protocoles mis en oeuvre dans le contrôleur de réseau radio 2, le dispositif D selon l'invention se situe de préférence au même niveau que la couche protocolaire mettant en oeuvre le protocole RRC. Sur cette figure 2, le dispositif D est matérialisé sous la forme d'une couche protocolaire référencée MBR (pour « Multimedia Broadcast Relay »).

Lorsqu'un téléphone mobile 3-j reçoit un message de signalisation (MBMS) diffusé par le réseau d'accès radio 4, il utilise les informations qu'il contient pour se configurer de manière à pouvoir surveiller le canal de trafic commun de type CTCH qui est associé au service de diffusion de contenus multimédia dans la cellule Ci dans laquelle il est situé et/ou dans au moins une cellule voisine de cette dernière.

Il est important de noter que le canal de trafic commun de type CTCH qui est associé à un service de diffusion de contenus multimédia est choisi en fonction de la qualité de service (QoS) requise pour ledit service. Ainsi, on peut utiliser un canal physique de transport UMTS spécifique de type SCCPCH (pour « Secondary Common Control Physical Channel ») d'un canal FACH (pour « Forward Access Channel » - canal de transport UMTS qui constitue la partie descendante (ou « downlink ») d'une paire de canaux de transport de type RACH (« Random Access Channel »)), pour obtenir un débit de transmission compris entre 8 kbits/s et 1920 kbits/s (selon l'environnement radio).

Une fois que le module de contrôle MC2 a activé un service de diffusion multimédia, il sélectionne des données multimédia en fonction d'instructions fournies par le coeur de réseau 5 et/ou par l'OMC, parmi les données qui ont été reçues par le module de collection MC1 en provenance d'un serveur de contenus multimédia SC. Ces données multimédia sont celles qui correspondent au service de diffusion MBMS qui vient d'être activé et qui doivent être diffusées conformément à leur programmation de diffusion sur le canal de trafic commun de type CTCH correspondant.

Les données multimédia sélectionnées sont destinées à être intégrées dans un message de données qui doit être transmis par le contrôleur de réseau radio 2 sur le canal de trafic commun de type CTCH à destination des téléphones mobiles 3-j.

Chaque message de données est généré (sur ordre du module de contrôle MC2) par une couche protocolaire d'adaptation de services de diffusion de type BMC, faisant partie de la pile de protocoles du contrôleur de réseau radio 2 (voir figure 2), puis transmis à destination des téléphones mobiles 3-j sur le canal de trafic commun de type CTCH désigné par le module de contrôle MC2.

Cette transmission se faisant au moyen de messages BMC, également utilisés pour transmettre aux téléphones mobiles 3-j des messages de service de type CBS (définis dans les spécifications techniques TS 25.324 du 3GPP), elle peut être considérée comme étant du type dit « dans la bande » (ou « in-band ») sur le canal de trafic commun de type CTCH.

On entend ici par « transmission dans la bande » le fait de transmettre les messages de données (MBMS) multiplexés temporellement avec d'autres données ou messages de service de type CBS.

La couche protocolaire BMC du contrôleur de réseau radio 2 peut par exemple intégrer les données multimédia à diffuser dans un message dédié de type BMC. Dans ce cas, on utilise préférentiellement de nouveaux messages BMC afin de permettre de les distinguer par rapport aux messages BMC existants qui comportent des données de service CBS.

La définition de tels nouveaux messages BMC est actuellement possible étant donné que seuls trois types de messages BMC sont actuellement utilisés sur les 255 possibles.

Dans une variante, la couche protocolaire BMC du contrôleur de réseau radio 2 peut par exemple intégrer les données multimédia à diffuser dans des messages BMC existants. Dans ce cas, l'entête du message BMC comprend un champ qui prend soit une première valeur binaire lorsque ledit message comprend des données multimédia MBMS, soit une seconde valeur binaire lorsque ledit message comprend des données CBS.

Dans ce cas, le dispositif D contrôle le multiplexage au niveau de la couche protocolaire BMC. Par ailleurs, chaque téléphone mobile 3-j doit alors comporter, comme illustré en pointillés sur les figures 1 et 2, un module de traitement MT assurant une fonction de démultiplexage. Plus précisément, le module de traitement MT est chargé d'extraire (démultiplexer) de chaque message de type BMC, reçu sur un canal de trafic commun de type CTCH, les données multimédia MBMS ou les données CBS qu'il comprend, afin de les router vers l'application interne Al correspondante. Ce module de traitement MT peut alors être assimilé à une nouvelle couche protocolaire.

Le dispositif de contrôle D selon l'invention agit donc comme une couche d'adaptation chargée de gérer la signalisation 3GPP MBMS pour activer des canaux de trafic communs de type CTCH R99 (grâce à une signalisation appropriée) et d'appliquer les données multimédia des contenus à diffuser dans ces canaux de trafic communs de type CTCH R99. Il contrôle ainsi aussi bien le plan de contrôle (ou « control plan ») utilisé pour la transmission de la signalisation MBMS, que le plan d'utilisateur (ou « user plan ») utilisé pour la transmission des données multimédia.

Les téléphones mobiles 3-j peuvent surveiller au moins un canal de trafic commun de type CTCH R99 soit de façon permanente, soit lorsqu'ils y sont invités par le biais de messages spécifiques encapsulés dans des messages BMC. Dans cette dernière hypothèse, les messages spécifiques peuvent par exemple être de type MT SMS (pour « Mobile Terminated Short Message Service » - message court se terminant dans le mobile) et comporter les horaires de début et de fin d'une session de transmission de contenu multimédia. Ces horaires sont par exemple fournis à la couche protocolaire BMC du contrôleur de réseau radio 2 par son dispositif de contrôle D (ou MBR).

Lorsqu'un service de diffusion est payant, les contenus multimédia sont diffusés de façon cryptée. Chaque utilisateur de téléphone mobile 3-j, qui souhaite recevoir les données d'un contenu multimédia, doit alors être enregistré auprès d'un équipement du réseau mobile afin de pouvoir disposer des clés de cryptage. Ces clés peuvent par exemple lui être transmises via le plan d'utilisateur (UMTS R99), après une phase d'authentification de l'identité de l'utilisateur.

Le dispositif de contrôle D selon l'invention, et notamment son module de contrôle MC2 et son module de collection MC1, et le module de traitement MT peuvent être réalisés sous la forme de modules logiciels (ou informatiques), de circuits électroniques, ou d'une combinaison de circuits et de logiciels.

L'invention ne se limite pas aux modes de réalisation de dispositif de contrôle, de contrôleur de réseau radio et d'équipement d'utilisateur (ou terminal de communication) décrits ci-avant, seulement à titre d'exemple, mais elle englobe toutes les variantes que pourra envisager l'homme de l'art dans le cadre des revendications ci-après.

## Revendications

1. Dispositif (D) de contrôle de fourniture à des équipements d'utilisateurs (3-j) de données relatives à un service de diffusion de contenus multimédia, via un réseau d'accès radio (4) d'un réseau de télécommunication mobile disposant en outre d'un coeur de réseau (5) et d'un système de gestion de réseau (6), **caractérisé en ce qu'**il équipe un contrôleur de réseau radio (2) dudit réseau d'accès radio (4), et **en ce qu'**il comprend i) des moyens de collection (MC1) agencés pour recevoir des données d'informations de configuration dudit système de gestion de réseau (6) et des données multimédia de contenus à diffuser d'au moins un serveur de contenus multimédia (SC), via ledit coeur de réseau (5), et ii) des moyens de contrôle (MC2) agencés pour sélectionner parmi lesdites données reçues des données d'informations de configuration, propres à permettre à des équipements d'utilisateurs (3-j), situés dans au moins une cellule contrôlée par ledit contrôleur de réseau radio (2), de se configurer pour surveiller au moins un canal de trafic commun de type CTCH, de sorte qu'elles soient intégrées dans un message de signalisation destiné à être transmis sur un canal de contrôle auxdits équipements d'utilisateurs (3-j), puis des données multimédia de sorte qu'elles soient intégrées dans un message de données destiné à être transmis auxdits équipements d'utilisateurs (3-j) sur ledit canal de trafic commun de type CTCH.

2. Dispositif selon la revendication 1, **caractérisé en ce qu'**en présence d'un contrôleur de réseau radio (2) comprenant une pile de protocoles comportant notamment une première couche dédiée au contrôle de ressources radio et destinée à transmettre des messages de signalisation à destination d'équipements de réseau (3-j) et une seconde couche d'adaptation de services de diffusion de type BMC, Broadcast and Multicast Control, destinée à transmettre des messages de données à destination desdits équipements de réseau (3-j), lesdits moyens de contrôle (MC2) sont agencés pour ordonner à ladite première couche d'intégrer les données d'informations de configuration sélectionnées dans un message de signalisation afin de les transmettre auxdits équipements d'utilisateurs (3-j) sur ledit canal de contrôle, puis pour ordonner à ladite seconde couche d'intégrer lesdites données multimédia sélectionnées dans un message de données afin de les transmettre auxdits équipements d'utilisateurs (3-j) sur ledit canal de trafic commun de type CTCH.

3. Dispositif selon la revendication 2, **caractérisé en ce que** lesdits moyens de contrôle (MC2) sont agencés pour ordonner à ladite seconde couche d'intégrer lesdites données multimédia sélectionnées dans des messages de type BMC comprenant un entête signalant qu'ils comprennent de telles données multimédia.

4. Dispositif selon la revendication 2, **caractérisé en ce que** lesdits moyens de contrôle (MC2) sont agencés pour ordonner à ladite seconde couche d'intégrer lesdites données multimédia sélectionnées dans des messages de type BMC dédiés spécifiquement au transport de données multimédia.

5. Dispositif selon l'une des revendications 1 à 4, **caractérisé en ce que** lesdites données multimédia sont diffusées dans le cadre de services de diffusion de type MBMS.

6. Dispositif selon avec l'une des revendications 1 à 5, **caractérisé en ce que** lesdites données multimédia sont issues d'un coeur de réseau de type MBMS, défini dans la norme 3GPP version n°6.

7. Contrôleur de réseau radio (2) pour un réseau d'accès radio (4) d'un réseau de télécommunication mobile, ledit contrôleur (2) comprenant une pile de protocoles comportant notamment une première couche dédiée au contrôle de ressources radio et destinée à transmettre des messages de signalisation à destination d'équipements de réseau (3-j) et une seconde couche d'adaptation de services de diffusion de type BMC destinée à transmettre des messages de données à destination desdits équipements de réseau (3-j), **caractérisé en ce qu'**il comprend un dispositif de contrôle (D) selon l'une des revendications précédentes agencé pour alimenter lesdites première et seconde couches respectivement en données d'informations de configuration sélectionnées et en données multimédia sélectionnées en vue de leur transmission à des équipements de réseau (3-j).

8. Equipement d'utilisateur (3-j), propre à se connecter à un réseau d'accès radio (4) d'un réseau de télécommunication mobile, **caractérisé en ce qu'**il comprend i) une application multimédia interne (AI) agencée pour utiliser des données multimédia, et ii) des moyens de traitement (MT) agencés, en cas de réception d'un message de type BMC comportant des données multimédia et transmis par un contrôleur de réseau radio (2) selon la revendication 7 sur un canal de trafic commun de type CTCH, pour extraire lesdites données multimédia dudit message de type BMC reçu afin de les transmettre à ladite application multimédia interne (AI).

9. Utilisation du dispositif de contrôle (D), du contrôleur de réseau radio (2) et de l'équipement d'utilisateur (3-j) selon l'une des revendications précédentes dans un réseau de télécommunication mobile de type choisi dans un groupe comprenant au moins GPRS, UMTS et CDMA.

## Claims

1. Device (D) for controlling the supply to user devices (3-j) of data relating to a multimedia content broadcast service, via a radio access network (4) of a mobile telecommunications network which also has a core network (5) and a network management system (6), **characterized in that** it equips base station controller (2) of said radio access network (4), and **in that** it includes i) collection means (MC1) configured to receive configuration information data from said network management system (6) and multimedia data of content to be broadcast from at least one multimedia content server (SC), via said core network (5), and ii) control means (MC2) configured to select, from among said data received, configuration information data able to allow user devices (3-j), located in at least one cell controlled by said base station controller (2), to configure themselves to monitor at least one CTCH type common traffic channel, such that it is integrated into a signaling message intended to be transmitted on a control channel to said user devices (3-j), then multimedia data such that it is integrated into a data message intended to be transmitted to said user devices (3-j) on said CTCH type common traffic channel.

2. Device according to claim 1, **characterized in that** in the presence of base station controller (2) including a protocol stack comprising in particular a first layer dedicated to the control of radio resources and intended to transmit signaling messages to network devices (3-j) and a second layer for adaptation of BMC (Broadcast and Multicast Control) type broadcast services, intended to transmit data messages to said network devices (3-j), said control means (MC2) are configured to order said first layer to integrate the selected configuration information data into a signaling message in order to transmit it to said user devices (3-j) on said control channel, then to order said second layer to integrate said multimedia data selected into a data message in order to transmit it to said user devices (3-j) on said CTCH type common traffic channel.

3. Device according to claim 2, **characterized in that** said control means (MC2) are configured to order said second layer to integrate said multimedia data selected into BMC type messages including a header signaling that they include such multimedia data.

4. Device according to claim 2, **characterized in that** said control means (MC2) are configured to order said second layer to integrate said multimedia data selected into BMC type messages specifically dedicated to carrying multimedia data.

5. Device according to one of claims 1 to 4, **characterized in that** said multimedia data is broadcast in the context of MBMS type broadcast services.

6. Device according to one of claims 1 to 5, **characterized in that** said multimedia data comes from an MBMS type core network, defined in the 3GPP standard version no. 6.

7. Base station controller (2) for a radio access network (4) of a mobile telecommunications network, said controller (2) including a protocol stack comprising in particular a first layer dedicated to the control of radio resources and intended to transmit signaling messages to network devices (3-j) and a second layer for the adaptation of BMC type broadcast services intended to transmit data messages to said network devices (3-j), **characterized in that** it includes a control device (D) according to one of the previous claims configured to supply said first and second layers respectively with selected configuration information data and with selected multimedia data with a view to its transmission to network devices (3-j).

8. User device (3-j), able to connect to a radio access network (4) of a mobile telecommunications network, **characterized in that** it includes i) an internal multimedia application (AI) configured to use multimedia data, and ii) processing means (MT) configured, in the event of reception of a BMC type message comprising multimedia data and transmitted by base station controller (2) according to claim 7 on a CTCH type common traffic channel, to extract said multimedia data from said BMC type message received in order to transmit it to said internal multimedia application (AI).

9. Use of the control device (D), the base station controller (2) and the user device (3-j) according to one of the previous claims in a mobile telecommunications network of a type chosen from a group including at least GPRS, UMTS and CDMA.

## Patentansprüche

1. Steuereinrichtung (D) zur Bereitstellung von sich auf einen Übertragungsdienst von multimedialen Inhalten beziehenden Daten an Benutzergeräte (3-j) über ein Funkzugangsnetz (4) eines mobilen Telekommunikationsnetzwerks, welches weiterhin über einen Netzwerkkern (5) und ein Netzwerkverwaltungssystem (6) verfügt, **dadurch gekennzeichnet, dass** sie eine Funknetzsteuerung (2) des besagten Funkzugangsnetzes (4) ausstattet, und dass sie umfasst: i) Erfassungsmittel (MC1), welche dazu ausgelegt sind, Konfigurationsinformationsdaten des besagten Netzwerkverwaltungssystems (6) und multimediale Daten von zu übertragenden Inhalten von mindestens einem Server für multimediale Inhalte (SC) über den besagten Netzwerkkern (5) zu empfangen, und ii) Steuermittel (MC2), welche dazu ausgelegt sind, unter den besagten empfangenen Daten Konfigurationsinformationsdaten, die es den in mindestens einer von der besagten Funknetzsteuerung gesteuerten Zelle vorhandenen Benutzergeräten (3-j) ermöglichen, sich zu konfigurieren, um mindestens einen gemeinsamen Verkehrskanal vom Typ CTCH zu überwachen, um sie in eine für die Übertragung auf einem Steuerkanal an die besagten Benutzergeräte (3-j) bestimmte Signalisierungsnachricht zu integrieren, und anschließend multimediale Daten, um sie in eine für die Übertragung auf dem besagten gemeinsamen Verkehrskanal vom Typ CTCH an die besagten Benutzergeräte (3-j) bestimmte Datennachricht zu integrieren, auszuwählen.

2. Einrichtung nach Anspruch 1, **dadurch gekennzeichnet, dass** bei Vorhandensein einer Funknetzsteuerung (2) mit einem Protokollstapel, welcher insbesondere eine erste Schicht, die für die Steuerung von Funkressourcen dediziert und dazu bestimmt ist, Signalisierungsnachrichten an Netzgeräte (3-j) zu übertragen, und eine zweite Schicht zur Anpassung von Broadcast-Diensten vom Typ BMC, Broadcast and Multicast Control, welche dazu bestimmt ist, Datennachrichten an die besagten Netzgeräte (3-j) zu übertragen, umfasst, wobei die besagten Steuermittel (MCS) dazu ausgelegt sind, der besagten ersten Schicht zu befehlen, die ausgewählten Konfigurationsinformationsdaten in eine Signalisierungsnachricht zu integrieren, um sie auf dem besagten Steuerkanal an die besagten Benutzergeräte (3-j) zu übertragen, und anschließend der besagten zweiten Schicht zu befehlen, die besagten ausgewählten multimedialen Daten in eine Datennachricht zu integrieren, um sie auf dem besagten gemeinsamen Verkehrskanal vom Typ CTCH an die besagten Benutzergeräte (3-j) zu übertragen.

3. Einrichtung nach Anspruch 2, **dadurch gekennzeichnet, dass** die besagten Steuermittel (MC2) dazu ausgelegt sind, der besagten zweiten Schicht zu befehlen, die besagten ausgewählten multimedialen Daten in Nachrichten vom Typ BMC mit einem Kopfteil, welcher signalisiert, dass sie solche multimedialen Daten enthalten, zu integrieren.

4. Einrichtung nach Anspruch 2, **dadurch gekennzeichnet, dass** die besagten Steuermittel (MC2) dazu ausgelegt sind, der besagten zweiten Schicht zu befehlen, die besagten ausgewählten multimedialen Daten in Nachrichten vom Typ BMC, welche spezifisch für den Transport von multimedialen Daten bestimmt sind, zu integrieren..

5. Einrichtung nach einem der Ansprüche 1 bis 4, **dadurch gekennzeichnet, dass** die besagten multimedialen Daten im Rahmen von Broadcast-Diensten vom Typ MBMS ausgestrahlt werden.

6. Einrichtung nach einem der Ansprüche 1 bis 5, **dadurch gekennzeichnet, dass** die besagten multimedialen Daten von einem Netzwerkkern vom Typ MBMS, definiert in der Norm 3GPP, Version Nr. 6, stammen.

7. Funknetzsteuerung (2) für ein Funkzugangsnetz (4) eines mobilen Telekommunikationsnetzwerks, wobei die besagte Steuerung (2) einen Protokollstapel enthält, welcher insbesondere eine erste Schicht, die für die Steuerung von Funkressourcen dediziert und dazu bestimmt ist, Signalisierungsnachrichten an Netzgeräte (3-j) zu übertragen, und eine zweite Schicht zur Anpassung von Broadcast-Diensten vom Typ BMC, die dazu bestimmt ist, Datennachrichten an die besagten Netzgeräte (3-j) zu übertragen, umfasst, **dadurch gekennzeichnet, dass** sie eine Steuereinrichtung (D) nach einem der vorstehenden Ansprüche umfasst, welche dazu ausgelegt ist, die besagte erste und die besagte zweite Schicht jeweils mit ausgewählten Konfigurationsinformationsdaten und mit ausgewählten multimedialen Daten für deren Übertragung an Netzgeräte (3-j) zu versorgen.

8. Benutzergerät (3-j), dazu ausgelegt, sich an ein Funkzugangsnetz (4) eines mobilen Telekommunikationsnetzwerks anzuschließen, **dadurch gekennzeichnet, dass** es umfasst: i) eine interne Multimedia-Anwendung (AI), welche geeignet ist, multimediale Daten zu benutzen, und ii) Verarbeitungsmittel (MT), die geeignet sind, bei Empfang einer Nachricht vom Typ BMC, welche multimediale Daten enthält und von einer Funknetzsteuerung (2) nach Anspruch 7 auf einem gemeinsamen Verkehrskanal vom Typ CTCH übertragen wurde, die besagten multimedialen Daten aus der besagten empfangenen Nachricht vom Typ BMC zu extrahieren, um sie an die besagte interne multimediale Anwendung (AI) zu übertragen.

9. Verwendung der Steuereinrichtung (D), der Funknetzsteuerung (2) und des Benutzergeräts (3-j) nach einem der vorstehenden Ansprüche in einem mobilen Telekommunikationsnetzwerk eines in einer Gruppe, welche mindestens GPRS, UMTS und CDMA umfasst, gewählten Typs.
